**Europäisches Patentamt**

**European Patent Office**

**Office européen des brevets**

(19)

(11) Veröffentlichungsnummer : **0 148 492**
**B1**

(12) **EUROPÄISCHE PATENTSCHRIFT**

(45) Veröffentlichungstag der Patentschrift :
28.09.88

(51) Int. Cl.⁴ : **G 01 N 27/56**, G 01 N 33/20

(21) Anmeldenummer : 84116116.9

(22) Anmeldetag : 21.12.84

(54) **Vorrichtung zum Messen des Sauerstoffgehaltes und der Temperatur von Metallschmelzen während des Frischens in einem Konverter.**

(30) Priorität : 23.12.83 DE 3346658

(43) Veröffentlichungstag der Anmeldung :
17.07.85 Patentblatt 85/29

(45) Bekanntmachung des Hinweises auf die Patenterteilung : 28.09.88 Patentblatt 88/39

(84) Benannte Vertragsstaaten :
AT BE DE FR GB IT LU NL SE

(56) Entgegenhaltungen :
DE-A- 2 007 074
DE-A- 2 833 397
GB-A- 1 191 222
LU-A-  69 795
US-A- 3 630 874
US-A- 3 758 397

(73) Patentinhaber : **Thyssen Stahl Aktiengesellschaft**
**Kaiser-Wilhelm-Strasse 100**
**D-4100 Duisburg 11 (DE)**

**Ferrotron Elektronik GmbH**
**Am Schürmannshütt 30**
**D-4130 Moers 1 (DE)**

(72) Erfinder : **Höffken, Erich, Dr.**
**Schlehenhag 1**
**D-4220 Dinslaken (DE)**
Erfinder : **Florin, Wolfram**
**Kirchstrasse 162 a**
**D-4220 Dinslaken (DE)**
Erfinder : **Mach, Johannes, Dr.**
**Am Jungbornpark 218**
**D-4130 Moers 3 (DE)**

(74) Vertreter : **Patentanwaltsbüro Cohausz & Florack**
**Schumannstrasse 97**
**D-4000 Düsseldorf 1 (DE)**

## Beschreibung

Die Erfindung bezieht sich auf eine Vorrichtung zum Messen des Sauerstoffgehaltes und der Temperatur von Metallschmelzen mit Hilfe eines aus einer EMK-Zelle und einem Thermoelement bestehenden Meßkopfes.

Derartige Vorrichtungen, die sich beispielsweise für Messungen des Sauerstoffgehaltes und der Temperatur von Metallschmelzen in Pfannen (« iron ladles » oder « steel ladles ») eignen, sind bekannt (Prospekt der Firma Ferrotron Elektronik GmbH « Sauerstoffmeßsonde für flüssige Metallbäder », Februar 1982 ; DE-A-2900069 ; DE-C-2327009). Sie bestehen aus einer EMK-Zelle und einem Thermoelement, die zusammen mit der sie haltenden Tonerdemasse den Meßkopf der Vorrichtung bilden und dessen Fuß in ein Trägerrohr, vorzugsweise aus Pappe, eingeschoben und von dem Trägerrohr gehalten wird. Um das Trägerrohr vor einer zu schnellen Zerstörung durch das Metallbad in der Pfanne zu schützen bzw. zur Gewährleistung einer genügend großen Standzeit dieser Vorrichtung für die Messung ist das Trägerrohr bis auf sein unteres Ende über die gesamte in das Metallbad eintauchende Länge der Vorrichtung von einer zylindrischen Hülle, vorzugsweise ebenfalls aus Pappe, umgeben. Im unteren Bereich des Trägerrohres in der Nähe des Meßkopfes werden dagegen das Trägerrohr und ein Teil des Meßkopf-Fußes durch eine zylindrische feuerfeste Schutzhülse vor dem Metallbad geschützt. Diese feuerfeste Schutzhülse besitzt annähernd den gleichen Durchmesser wie die sich unmittelbar daran anschließende, das Trägerrohr umgebende Hülle. Mit Hilfe der Schutzhülse werden die beim Verbrennen der Hülle entstehenden, die Meßergebnisse negativ beeinflussenden Verbrennungsprodukte, insbesondere Gase, von dem Meßkopf ferngehalten. In der Praxis wird dies in jedem Fall gewährleistet, wenn bei einem Durchmesser der das Trägerrohr umgebenden Hülle und der Schutzhülse von etwa 40 bis 55 mm die Länge der feuerfesten Schutzhülse etwa 100 mm beträgt. Zwar ist zwecks Materialeinsparung bereits versucht worden, die Länge der Schutzhülse zu reduzieren. Versuche haben jedoch gezeigt, daß bei einer Länge der Schutzhülse von kleiner als 50 mm keine genauen Meßergebnisse erzielt werden konnten.

Um nun den Sauerstoffgehalt und die Temperatur einer Metallschmelze zu messen, wird diese vorbekannte Vorrichtung an dem Ende eines Halterohres bzw. einer Lanze befestigt und in das Metallbad eingeführt. Dazu wird die Vorrichtung mit ihrem dem Meßkopf gegenüberliegenden Ende mit einem üblicherweise ringförmigen Querschnitt über das Kontaktstück auf das Kontaktrohr des Halterohres geschoben und von dem Kontaktrohr gehalten. Anschließend wird sie mit Hilfe des Halterohres in das Metallbad gegebenenfalls manuell eingeführt, nach der Messung wieder ausgefahren und im Anschluß daran gegen eine neue ausgetauscht. Unmittelbar im Anschluß daran kann eine zweite Messung des Sauerstoffgehaltes und der Temperatur erfolgen, wobei das Zeitintervall zwischen zwei aufeinanderfolgenden Messungen primär durch die Zeit bestimmt wird, die für den Austausch der verbrauchten Vorrichtung gegen eine neue Vorrichtung benötigt wird.

Es hat sich gezeigt, daß diese vorbekannte Vorrichtung aus den folgenden Gründen nicht geeignet ist, den Sauerstoffgehalt und die Temperatur von Metallschmelzen während des Frischens bzw. Blasens in einem Konverter zu messen :

Zum einen liegt dies an dem zu geringen Schutz des Trägerrohres der Vorrichtung nicht nur gegenüber dem Metallbad, sondern insbesondere vor den heißen Verbrennungsgasen im Konverter mit einer wesentlich höheren Temperatur in der Größenordnung von ca. 2.000 °C. Insbesondere beim Einfahren der Vorrichtung mittels einer Sublanze in den Konverter reicht der bisherige Schutz des Meßkopfes nicht aus.

Zum anderen ist die Ansprechzeit dieser Sonde, die etwa 10 bis 15 s beträgt, zu lang, um die Werte des Sauerstoffgehaltes und der Temperatur der Metallschmelze während des Frischens im Konverter in noch kürzerer Zeit zu erhalten.

Darüber hinaus dringen in den Spalt zwischen dem oberen, dem Meßkopf gegenüberliegenden Ende der Vorrichtung und dem Halterohr, insbesondere aufgrund der Bad- und Schlackenbewegung während des Frischens der Metallschmelze in dem Konverter, verstärkt Spritzer aus heißem Stahl und überwiegend aus heißer Schlacke ein. Dies bedeutet aber, daß in diesem Bereich, insbesondere an dem üblicherweise aus metallischem Material bestehenden Halterohr eine sogenannte Verbärung durch erstarrte Schlacken- und Stahlspritzer auftritt, indem die sehr heißen Schlacken- und Stahlspritzer auf die wesentlich kühlere Oberfläche auftreffen und auf dieser erstarren. Insbesondere wenn mehrere aufeinanderfolgende Messungen durchgeführt werden ohne ein Entfernen der erstarrten Schlacken- und Stahlspritzer bei jedem Wechsel einer verbrauchten Vorrichtung gegen eine neue, schließt das obere Ende der Vorrichtung häufig bereits nach einem zweimaligen Wechsel der Vorrichtung nicht mehr bündig mit dem Halterohr bzw. mit der Sublanze ab. Wird jedoch der Abstand oberes Ende der Vorrichtung/Halterohr aufgrund der in den Spalt eingedrungenen und erstarrten Spritzer zu groß, so ist der elektrische Kontakt zwischen dem Meßkopf der Vorrichtung und dem Kontaktstück des Halterohres bzw. der Sublanze nicht mehr gewährleistet.

Hiervon ausgehend liegt der Erfindung die Aufgabe zugrunde, eine Vorrichtung der eingangs genannten Art zu schaffen, die exakte Messungen des Sauerstoffgehaltes und der Temperatur während des Frischens in einem Konverter ermöglicht.

Ausgehend von einer Vorrichtung nach dem Oberbegriff von Anspruch 1 wird diese Aufgabe erfindungsgemäß dadurch gelöst, daß das Trägerrohr vorzugsweise und die das Trägerrohr umgebende Hülle oder Hüllen ausschließlich aus Pappe bestehen, und daß Trägerrohr und Hüllen an ihrem unteren Ende durch einen Schirm, der im wesentlichen nur die Unterseite der Hüllen abdeckt, vor den heißen Verbrennungsgasen und dem Metallbad geschützt sind.

Der wesentliche Vorteil der erfindungsgemäßen Vorrichtung besteht darin, daß mit ihr Messungen im blasenden Konverter ermöglicht werden.

Darüber hinaus kann mit der erfindungsgemäßen Vorrichtung der gleiche bezüglich seiner Herstellung kostengünstige Meßkopf, wie er bei Messungen in Pfannen eingesetzt wird, auch für Messungen des Sauerstoffgehaltes und der Temperatur im blasenden Konverter benutzt werden.

Wird der Durchmesser der das Trägerrohr umgebenden äußeren Hülle den höheren Temperaturen im blasenden Konverter derart angepaßt, daß eine Standzeit der erfindungsgemäßen Vorrichtung von ca. 8 bis 10 s gewährleistet ist, so ist es mit ihr möglich, den Sauerstoffgehalt und die Temperatur bereits nach einer Ansprechzeit von nur ca. 3 bis 6 s zu messen. Daraus resultiert ein weiterer wesentlicher Vorteil der erfindungsgemäßen Vorrichtung, der darin zu sehen ist, daß eine oder sogar mehrere Messungen hintereinander im Konverter, insbesondere kurz vor Blasende, durchgeführt werden können.

Darüber hinaus kann nunmehr der Kohlenstoffgehalt in der Metallschmelze mit einer wesentlich höheren Genauigkeit gemessen bzw. bestimmt werden, als dies bisher mit Hilfe des thermischen Verfahrens, das heißt mittels der beispielsweise in der DE-B 15 98 830 beschriebenen thermischen Analyse einer Probe, möglich war.

Im Unterschied zu der vorbekannten für Messungen des Sauerstoffgehaltes und der Temperatur von Metallschmelzen in Pfannen geeigneten Vorrichtung, die mit der feuerfesten Schutzhülse ausgerüstet ist, hat sich überraschenderweise gezeigt, daß für Messungen im Konverter lediglich das untere Ende des Trägerrohres und der das Trägerrohr umgebenden Hülle oder Hüllen durch einen Schirm geringer Dicke geschützt werden muß. Erfindungsgemäß reicht dabei bereits eine Dicke des Schirmes von maximal 4 cm aus. Vorzugsweise beträgt die Dicke des Schirmes etwa 1,5 cm.

Der Schirm besteht dabei aus einem Material, das Sauerstoff nicht bzw. nur in ganz geringen Mengen abgibt oder aufnimmt, d. h. sauerstoffneutral ist, um die Sauerstoffmessung nicht zu stören, und Wärme praktisch nicht leitet, d. h. eine mit Pappe vergleichbare wärmeisolierende Wirkung besitzt, um die Temperaturmessung nicht zu verfälschen. Ferner ist das Material mechanisch widerstandsfähig und besitzt eine hohe Temperaturwechselbeständigkeit, um den heißen Verbrennungsgasen und der Metallschmelze länger widerstehen zu können, als die das Trägerrohr umgebende Hülle oder Hüllen. Ein geeignetes Material kann sich beispielsweise aus einem magnesithaltigen Pulver feiner Körnung, aus aufgeschlämmten Papierfasern und einem chemischen Binder als wesentliche Bestandteile des Materials zusammensetzen. Vorzugsweise besteht das Material aus ca. 60-95 Gew.-% eines im wesentlichen Magnesit enthaltenden Pulvers feiner Körnung, aus ca. 5-35 Gew.-% anorganische und/oder organische Fasern, Rest Harz und einem chemischen Binder. Diese Komponenten werden innig vermischt und anschließend getrocknet bzw. getempert.

Bevorzugt ist der Radius des Schirmes größer als die Länge des über den Schirm hinausragenden Teils des Meßkopfes. Ferner sollte der Durchmesser des Schirmes mindestens dem Durchmesser der das Trägerrohr umgebenden jeweils äußersten Hülle entsprechen, um den Meßkopf vor den Verbrennungsprodukten der Hüllen zu schützen.

Vorzugsweise ist der Schirm nicht integraler Bestandteil bzw. Teil des Meßkopfes der erfindungsgemäßen Vorrichtung sondern ist ein separates Bauteil und kann aus einem anderen Material als die Meßkopffassung bestehen. Dadurch wird die Fertigung des Schirmes vereinfacht und verbilligt, und es kann der gleiche Meßkopf, wie er bei Messungen in der Pfanne eingesetzt wird, verwendet werden unter Hinzufügung des Schirmes als separatem Bauteil. Dabei soll der Schirm einfache geometrische Gestalt bevorzugt die Form einer Scheibe oder einer Buchse haben.

Insbesondere aufeinanderfolgende Messungen des Sauerstoffgehaltes und der Temperatur von Metallschmelzen mit Hilfe der erfindungsgemäßen Vorrichtung während des Frischens in einem Konverter sind dann gewährleistet, wenn die das Trägerrohr der Vorrichtung umgebende Hülle bzw. Hüllen, die gleichzeitig auch das Kontaktrohr des Halterohres bzw. der Sublanze umschließen, an ihrem oberen, dem Meßkopf gegenüberliegenden Ende durch einen ringförmigen elastischen Spritzschutz geschützt sind. Vorzugsweise besteht dabei der Spritzschutz aus einem feuerfesten, faserförmigen Material, wie zum Beispiel Mineralwolle. Durch diese erfindungsgemäßen Maßnahmen wird in vorteilhafter Weise erreicht, daß nach jedem Wechsel einer verbrauchten Vorrichtung gegen eine neue erfindungsgemäße Vorrichtung der elektrische Kontakt zwischen dem Meßkopf und dem Kontaktstück des Halterohres stets gewährleistet ist. Es braucht nun nicht mehr die Verbärung durch die erstarrten Stahl- und Schlackenspritzer in diesem Bereich nach jeder Einzelmessung entfernt zu werden. In vorteilhafter Weise können dadurch aufeinanderfolgende Messungen in wesentlich kürzeren Zeitabständen durchgeführt werden.

Bezüglich ihrer Eignung für Messungen des Sauerstoffgehaltes und der Temperatur von Metallschmelzen während des Frischens in einem Konverter kann die erfindungsgemäße Vorrichtung weiter dadurch verbessert werden, daß die die EMK-Zelle und das Thermoelement umgebende erste Kappe aus metallischem Material und die diese erste Kappe umgebende Schutzhaube aus einem verbrennbaren Material von einer weiteren, zweiten Kappe aus metallischem Material umgeben werden. Bevorzugt liegt dabei die zweite Kappe mit ihrem Fuß an dem Schirm an und wird über eine Bohrung durch den Schirm mittels Halteelemente an der Hülle bzw. den Hüllen der Vorrichtung mechanisch befestigt. Durch diese Maßnahmen wird primär ein mechanischer Schutz, aber auch Schutz gegen die heißen, aus dem Konverter austretenden Gase sowie Stahl- und Schlackenspritzer erzielt. Insgesamt wird dadurch erreicht, daß weit weniger erfindungsgemäße Vorrichtungen bereits vor der eigentlichen Messung ausfallen.

Anhand der Zeichnung wird die Erfindung näher erläutert. Es zeigen.

Fig. 1 eine zum Stand der Technik zählende Vorrichtung für die Messung in einer Pfanne,

Fig. 2 die erfindungsgemäße Vorrichtung im Längsschnitt in einer Ausführung und

Fig. 3 den Längsschnitt einer weiteren Ausführung der erfindungsgemäßen Vorrichtung,

Fig. 4 den Längsschnitt einer weiteren Ausführung der erfindungsgemäßen Vorrichtung, die von dem zugehörigen Halterohr bzw. einer Sublanze gehalten wird.

Gleiche Teile sind in den verschiedenen Abbildungen mit denselben Bezugszeichen versehen.

Der die EMK-Zelle 1 und das Thermoelement 2 umfassende Meßkopf 3 ist bei allen in der Zeichnung dargestellten Ausführungen mit seinem Fuß 4 in das untere Ende eines aus Pappe bestehenden Trägerrohres 5 eingeschoben. Die EMK-Zelle 1, das Thermoelement 2 und das sie haltende Material bilden den Meßkopf 3. Der Durchmesser des Meßkopfes wird dabei möglichst klein gewählt und im wesentlichen durch die Dimensionen von EMK-Zelle und Thermoelement bestimmt. Um die für die EMK-Zelle erforderliche äußere Ableitung, das heißt ihren Kontakt mit dem Metallbad sicherzustellen, besteht das die EMK-Zelle und das Thermoelement haltende Material des Meßkopfes 3 vorzugsweise aus einer graphitisierten Tonerdemasse.

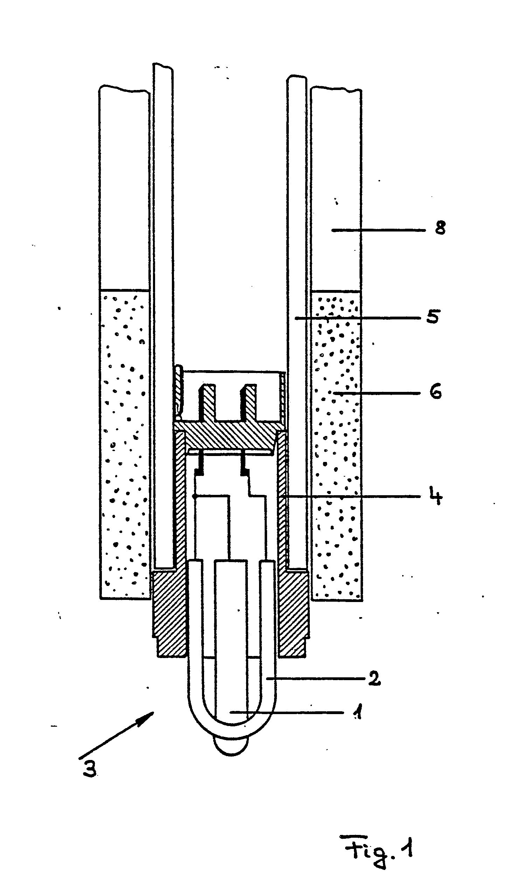

Bei der vorbekannten Vorrichtung gemäß Fig. 1, die sich nur für Messungen des Sauerstoffgehaltes und der Temperatur von Metallschmelzen in Pfannen eignet, ist der Meßkopffuß 4 des Meßkopfes 3 und das untere Ende des Trägerrohres 5 von einer feuerfesten Schutzhülse 6 umgeben. Daran schließt sich eine zylindrische Hülle 8 aus Pappe an, die das Trägerrohr ebenfalls zum Schutz vor einer zu schnellen Zerstörung durch das Metallbad umgibt und sich über die noch verbleibende gesamte in das Metallbad eintauchende Länge der Meßvorrichtung erstreckt.

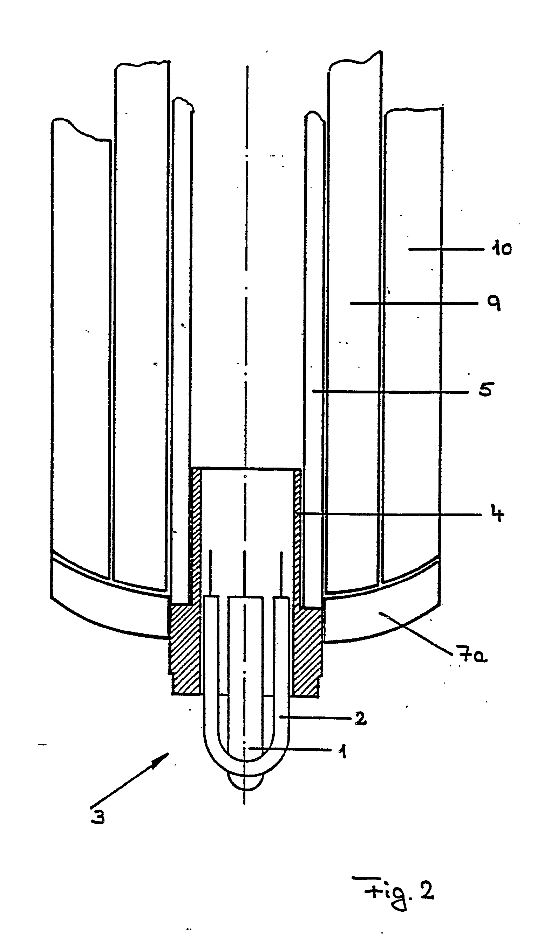

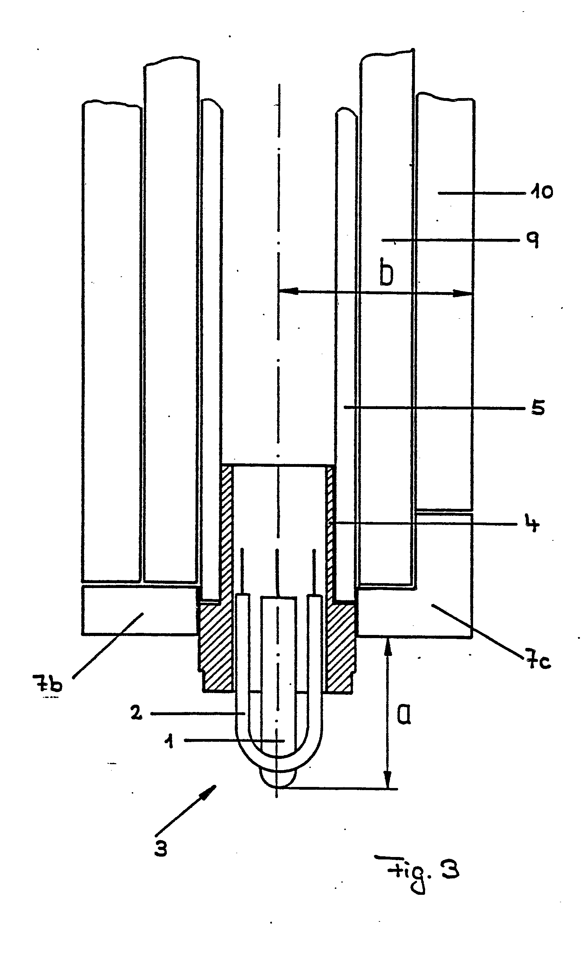

Bei den Ausführungsbeispielen der erfindungsgemäßen Vorrichtung gemäß Fig. 2 und Fig. 3 wird demgegenüber das Trägerrohr 5 nicht durch eine einzige dickere Hülle, sondern vielmehr durch zwei das Trägerrohr 5 umgebende Hüllen 9 und 10 aus Pappe vor dem Metallbad und den heißen Verbrennungsgasen im Konverter geschützt. Im Unterschied zu der vorbekannten Meßvorrichtung gemäß Fig. 1 weist die erfindungsgemäße Vorrichtung gemäß Fig. 2 am unteren Ende des Trägerrohres 5 jedoch keine feuerfesfeste Schutzhülse, sondern vielmehr einen als kugelig gekrümmte Scheibe 7a ausgebildeten Schirm auf, der das Trägerrohr 5 und die das Trägerrohr umgebenden Hüllen 9 und 10 aus Pappe schützt. Erfindungsgemäß ist dabei der Schirm nicht Bestandteil des Meßkopfes 3 und besteht vorzugsweise aus einem anderen Material als die Fassung des Meßkopfes.

Die Fig. 3 zeigt als Alternative zu der Ausführungsform der erfindungsgemäßen Vorrichtung gemäß Fig. 2 im linken Bildteil einen als ebene Ringscheibe 7b ausgebildeten Schirm. Im rechten Bildteil der Fig. 3 besitzt der Schirm die Form einer Buchse 7c.

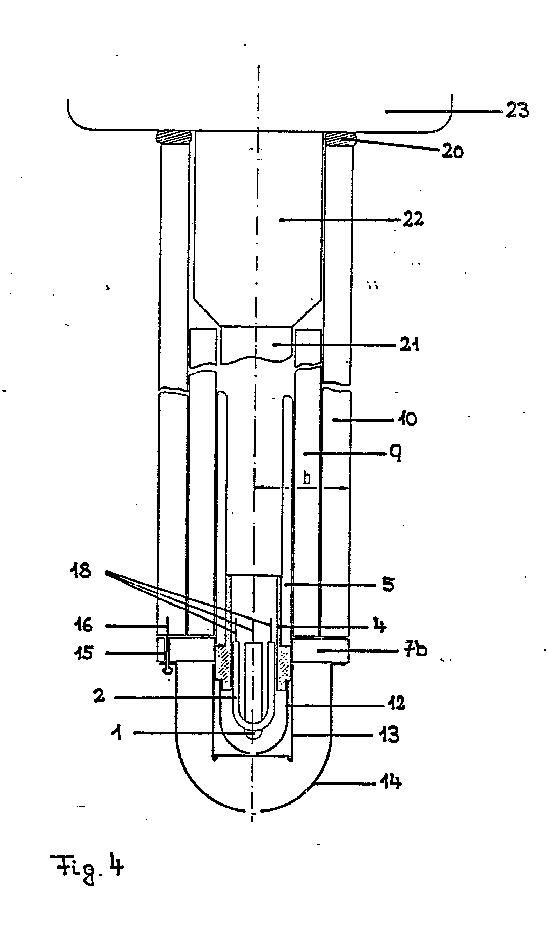

Die Fig. 4 zeigt die Ausführungsform der erfindungsgemäßen Vorrichtung gemäß Fig. 3, linker Bildteil zusammen mit dem Halterohr bzw. der Sublanze, an dem bzw. der die Vorrichtung befestigt ist und mit dem bzw. der sie in das Metallbad eingeführt wird. Dazu wird die äußere zylindrische Hülle 10 der in Fig. 4 dargestellten Ausführungsform der erfindungsgemäßen Vorrichtung über das Kontaktstück 21 auf das Kontaktrohr 22 des Halterohres 23 geschoben und von dem Kontaktrohr gehalten. Ferner zeigt Fig. 4 den erfindungsgemäßen ringförmigen elastischen Spritzschutz 20, der das obere Ende der Hülle 10 abdeckt und den Spalt zwischen Hülle 10 und Halterohr 23 vorzugsweise vollständig ausfüllt. Im nicht zusammengedrückten Zustand besitzt der ringförmige Spritzschutz eine Stärke von ca. 4 mm bis 1 cm. Durch diesen elastischen Schutz wird einerseits die Verbärung dieses Bereiches durch erstarrte Stahl- und Schlackenspritzer verhindert, andererseits der elektrische Kontakt zwischen den Leitungen 18 des Meßkopfes und dem Kontaktstück 21 des Halterohres 23 über einen nicht dargestellten Steckkontakt stets gewährleistet. Ferner zeigt die in Fig. 4 dargestellte Ausführungsform die erste Kappe 12 aus metallischem Material, die diese Kappe umgebende Schutzhaube 13 aus einem verbrennbaren Material und die erfindungsgemäße zweite Kappe aus metallischem Material (14), mit denen die EMK-Zelle 1 und das Thermoelement 2 der erfindungsgemäßen Vorrichtung umgeben sind und gegenüber mechanischer Beanspruchung, (gegen Stöße oder dgl.) den heißen Gasen und den Schlacken- sowie Stahlspritzern geschützt werden. Während die erste Kappe 12 und die Schutzhaube 13 von dem Fuß des Meßkopfes gehalten werden, liegt die zweite Kappe 14 auf dem Schirm 7b auf und ist über eine Bohrung 15 durch den Schirm mittels mindestens zwei Halteelemente 16 an der Hülle 10 mechanisch befestigt. Diese Halteelemente können beispielsweise Nägel, Schrauben oder dergleichen sein.

**Patentansprüche**

1. Vorrichtung zum Messen des Sauerstoffgehaltes und der Temperatur von Metallschmelzen mit einem aus einer EMK-Zelle (1) und einem Thermoelement (2) bestehenden Meßkopf (3), bei der der Meßkopffuß (4) an dem unteren Ende eines Trägerrohres (5), vorzugsweise aus Pappe, teilweise in das Trägerrohr eingeschoben und von dem Trägerrohr gehalten wird, das Trägerrohr (5) zum Schutz gegenüber dem Metallbad im wesentlichen bis zu seinem unteren Ende von mindestens einer Hülle (9, 10) umgeben ist und die EMK-Zelle (1) und das Thermoelement (2) zu ihrem Schutz vor dem Eintauchen der Vorrichtung in das Metallbad von innen nach außen von einer Metallkappe (12) und einer Schutzhaube (13) aus einem verbrennbaren Material umgeben sind, welche von dem über das Trägerrohr und die Hülle hinausragenden Teil des Meßkopfes gehalten werden, dadurch gekennzeichnet, daß die Hülle (9, 10) ausschließlich aus Pappe besteht und das Trägerrohr (5) und die Hülle (9, 10) an ihrem unteren Ende durch einen Schirm (7a, 7b, 7c) geschützt sind, der im wesentlichen nur die Unterseite der Hülle abdeckt.

2. Vorrichtung nach Anspruch 1, dadurch gekennzeichnet, daß der Schirm (7a, 7b, 7c) eine Dicke von maximal 4 cm besitzt.

3. Vorrichtung nach Anspruch 2, dadurch gekennzeichnet, daß der Schirm eine Dicke von etwa 1,5 cm hat.

4. Vorrichtung nach Anspruch 1, 2 oder 3, dadurch gekennzeichnet, daß der Schirm (7a, 7b, 7c) aus einem sauerstoffneutralen, wärmeisolierenden, mechanisch widerstandsfähigem Material mit hoher Temperaturwechselbeständigkeit besteht.

5. Vorrichtung nach einem der Ansprüche 1 bis 4, dadurch gekennzeichnet, daß der Radius des Schirmes (7a, 7b, 7c) größer ist als die Länge a des über den Schirm hinausragenden Teiles des Meßkopfes (3).

6. Vorrichtung nach einem der Ansprüche 1 bis 5, dadurch gekennzeichnet, daß der Durchmesser des Schirmes (7a, 7b, 7c) mindestens dem Durchmesser 2b der das Trägerrohr (5) umgebenden jeweils äußersten Hülle (9 bzw. 10) entspricht.

7. Vorrichtung nach einem der Ansprüche 1 bis 6, dadurch gekennzeichnet, daß der Schirm (7a, 7b, 7c) ein separates Bauteil ist.

8. Vorrichtung nach Anspruch 7, dadurch gekennzeichnet, daß der Schirm eine Scheibe (7b) ist.

9. Vorrichtung nach Anspruch 7, dadurch gekennzeichnet, daß der Schirm eine Haube in der Form einer Buchse (7c) ist.

10. Vorrichtung nach einem der Ansprüche 1 bis 9, dadurch gekennzeichnet, daß die Hülle (9, 10) an ihrem oberen, dem Meßkopf gegenüberliegenden Ende durch einen ringförmigen elastischen Spritzschutz (20) geschützt ist.

11. Vorrichtung nach Anspruch 10, dadurch gekennzeichnet, daß der Spritzschutz (20) aus einem feuersfesten, faserförmigen Material, insbesondere Mineralwolle, besteht.

12. Vorrichtung nach einem der Ansprüche 1-11, dadurch gekennzeichnet, daß die die EMK-Zelle (1) und das Thermoelement (2) umgebende Metallkappe (12) und die Schutzhaube (13) von einer weiteren, zweiten Kappe (14) aus metallischem Material umgeben sind.

13. Vorrichtung nach Anspruch 12, dadurch gekennzeichnet, daß die erste Kappe (12) und die Schutzhaube (13) von dem Fuß des Meßkopfes gehalten werden und die zweite Kappe (14) an dem Schirm anliegt und über eine Bohrung (15) durch den Schirm mittels Halteelementen (16) an der Hülle (9, 10) mechanisch befestigt ist.

## Claims

1. Device for measuring the oxygen content and the temperature of molten baths, comprising a measuring head (3) consisting of an EMF cell (1) and a thermocouple (2) in which device the base of the measuring head (4) at the lower end of a supporting tube (5), preferably of paperboard, is partly inserted into the supporting tube and is held by the supporting tube, the supporting tube (5) is surrounded, essentially down to its lower end, by at least one sheath (9, 10) as protection against the metal bath, and to protect them before the device is immersed in the metal bath, the EMF cell (1) and the thermocouple (2) are surrounded, viewed from the inside to the outside, by a metal cap (12) and a protective hood (13) of a combustible material which are held by the part of the measuring head projecting over the supporting tube and the sheath, characterized in that the sheath (9, 10) consists exclusively of paperboard and the supporting tube (5) and the sheath (9, 10) are protected at their lower end by a shield (7a, 7b, 7c) which essentially covers only the underside of the sheath.

2. Device according to Claim 1, characterized in that the shield (7a, 7b, 7c) has a maximum thickness of 4 cm.

3. Device according to Claim 2, characterized in that the shield has a thickness of about 1.5 cm.

4. Device according to Claim 1, 2 or 3, characterized in that the shield (7a, 7b, 7c) consists of a thermally insulating, mechanically resistant material with high resistance to thermal shock which is inert to oxygen.

5. Device according to one of the Claims 1 to 4, characterized in that the radius of the shield (7a, 7b, 7c) is greater than the length a of the part of the measuring head (3) projecting over the shield.

6. Device according to one of the Claims 1 to 5, characterized in that the diameter of the shield (7a, 7b, 7c) corresponds at least to the diameter 2. b of the outermost sheath (9 or 10) surrounding the supporting tube (5).

7. Device according to one of the Claims 1 to 6, characterized in that the shield (7a, 7b, 7c) is a separate component.

8. Device according to Claim 7, characterized in that the shield (7b) is a disc.

9. Device according to Claim 7, characterized in that the shield is a hood in the form of a collar (7c).

10. Device according to one of the Claims 1 to 9, characterized in that the sheath (9, 10) is protected by an annular elastic splash shield (20) at its upper end situated opposite the measuring head.

11. Device according to Claim 10, characterized in that the splash shield (20) consists of a refractory, fibrous material, in particular mineral wool.

12. Device according to one of the Claims 1-11, characterized in that the metal cap (12) and the protective hood (13) surrounding the EMF cell (1) and the thermocouple (2) are surrounded by a further, second cap (14) made of metallic material.

13. Device according to Claim 12, characterized in that the first cap (12) and the protective hood (13) are held by the base of the measuring head and the second cap (14) is in contact with the shield and is mechanically attached by means of retaining elements (16) to the sheath (9, 10) via a hole (15) through the shield.


**Revendications**

1. Dispositif pour mesurer la teneur en oxygène et la température de bains métalliques avec une tête de mesure (3) constituée d'une cellule f.é.m. (1) et d'un thermocouple (2), dans lequel le pied (4) de la tête de mesure est introduit à l'extrémité inférieure d'un tube-support (5), avantageusement en carton, partiellement glissé dans le tube — support et maintenu par le tube — support, le tube — support (5) est entouré par au moins une gaine (9, 10) pour la protection contre le bain métallique sensiblement jusqu'à son extrémité inférieure et la cellule f.é.m. (1) et le thermocouple (2) sont entourés, pour leur protection avant la plongée du dispositif dans le bain métallique, de l'intérieur vers l'extérieur, par une coiffe métallique (12) et un capot de protection (13) en un matériau combustible, qui sont maintenus par la partie de la tête de mesure qui fait saillie vers l'extérieur en — dessus du tube — support et de la gaine, caractérisé par le fait que la gaine (9, 10) est constituée exclusivement de carton et le tube — support (5) et la gaine (9, 10) sont protégés à leur extrémité inférieure par un écran (7a, 7b, 7c) qui recouvre sensiblement seulement la face inférieure de la gaine.

2. Dispositif selon la revendication 1, caractérisé par le fait que l'écran possède une épaisseur d'au plus 4 cm.

3. Dispositif selon la revendication 2, caractérisé par le fait que l'écran a une épaisseur d'environ 1,5 cm.

4. Dispositif selon la revendication 1, 2 ou 3, caractérisé par le fait que l'écran (7a, 7b, 7c) est en un matériau neutre vis-à-vis de l'oxygène, isolant thermiquement, résistant mécaniquement et possédant une stabilité élevée aux variations de température.

5. Dispositif selon l'une des revendications 1 à 4, caractérisé par le fait que le rayon de l'écran (7a, 7b, 7c) est supérieur à la longueur (a) de la partie de la tête de mesure (3) en saillie au-dessus de l'écran.

6. Dispositif selon l'une des revendications 1 à 5, caractérisé par le fait que le diamètre de l'écran (7a, 7b, 7c) correspond au moins au diamètre (2b) de la gaine (9 ou 10) entourant le tube — support (5) respectivement la plus extérieure.

7. Dispositif selon l'une des revendications 1 à 6, caractérisé par le fait que l'écran (7a, 7b, 7c) est une pièce séparée.

8. Dispositif selon la revendication 7, caractérisé par le fait que l'écran est un disque (7b).

9. Dispositif selon la revendication 7, caractérisé par le fait que l'écran est un capot ayant la forme d'une douille (7c).

10. Dispositif selon l'une des revendications 1 à 9, caractérisé par le fait que la gaine (9, 10) est protégée à son extrémité supérieure opposée à la tête de mesure par un carter de protection élastique annulaire (20).

11. Dispositif selon la revendication 10, caractérisé par le fait que le carter de protection (20) est constitué par un matériau fibreux réfractaire, en particulier laine minérale.

12. Dispositif selon l'une des revendications 1 à 11, caractérisé par le fait que la coiffe métallique (12) entourant la cellule f.é.m. (1) et le thermocouple (2) et le capot de protection (23) sont entourés par une seconde coiffe (14) en matériau métallique.

13. Dispositif selon la revendication 12, caractérisé par le fait que la première coiffe (12) et le capot de protection (13) sont portés par le pied de la tête de mesure et la seconde coiffe (14) est en saillie sur l'écran et est fixée mécaniquement à la gaine (9, 10), à travers un alésage (15) de l'écran, par des éléments de maintien (16).

Fig. 1

Fig. 2

Fig. 3

Fig. 4